# EUROPEAN PATENT SPECIFICATION

(11) **EP 3 390 048 B1**
(45) Date of publication and mention of the grant of the patent: **17.04.2024**
(21) Application number: 16876649.1
(22) Date of filing: 15.12.2016
(51) Int. Cl.: D06N 7/00, B32B 27/04, B32B 27/12, C09J 1/00, C09J 109/06, C09J 109/08, D03D 27/00, D06N 3/00, C09D 123/06, C09D 123/08, C08K 3/26, C08K 3/34

(54) **CARPET COATINGS, CARPETS WITH IMPROVED WET DELAMINATION STRENGTH AND METHODS OF MAKING SAME**
TEPPICHBESCHICHTUNGEN, TEPPICHE MIT VERBESSERTER NASSDELAMINIERUNGSFESTIGKEIT UND VERFAHREN ZUR HERSTELLUNG DAVON
REVÊTEMENTS DE TAPIS, TAPIS AYANT UNE RÉSISTANCE AMÉLIORÉE AU DÉCOLLEMENT DÛ À L'HUMIDITÉ ET LEURS PROCÉDÉS DE FABRICATION

(30) Priority: 15.12.2015 US 201562267754 P
(43) Date of publication of application: 24.10.2018
(73) Proprietor: Shaw Industries Group, Inc., Dalton, GA 30722 (US)
(72) Inventor: HALL, John, Harvey, Cartersville, GA 30120 (US)
(74) Representative: Dehns
(86) International application number: PCT/US2016/066832
(87) International publication number: WO 2017/106446

(56) References cited:
- EP-A2- 0 963 476
- EP-B1- 0 963 476
- DE-A1- 1 560 828
- US-A- 3 227 574
- US-A- 3 895 149
- US-A1- 2006 169 174
- US-A1- 2011 189 427
- US-A1- 2012 090 781
- US-A1- 2013 209 726
- US-A1- 2014 030 503
- US-B1- 6 610 769
- US-B1- 6 743 844
- US-B2- 8 097 325
- US-B2- 8 617 686

## Description

### FIELD OF THE INVENTION

The present invention pertains to carpet precoat compositions, carpets comprising inventive precoat compositions and methods of making same. More particularly, the present invention pertains to carpet precoat compositions based on a binder and a filler comprising kaolin clay slurry, carpets and carpet products having a structure comprising an inventive precoat composition and methods of making same.

### BACKGROUND OF THE INVENTION

Most conventional carpets comprise a primary backing with yarn tufts in the form of cut or uncut loops extending upwardly from the backing to form a pile surface. In the case of tufted carpets, the yarn is inserted into a primary backing by tufting needles and a binder (carpet coating) is applied thereto. In the case of non-tufted or bonded pile carpets, the fibers are embedded and actually held in place by the binder composition.

In both cases, the carpet construction usually also includes a secondary backing bonded to the primary backing. The secondary backing provides extra padding to the carpet, absorbs noise, adds dimensional stability and often functions as a heat insulator. Similar techniques are used in the preparation of continuous (rolled) carpets as well as carpet tiles.

An important characteristic of carpet is the ability to exhibit good physical properties even when the carpet is exposed to water. Carpets can be routinely exposed to water from steam cleaning processes. In such situations the wet strength of the carpet is important since inadequate wet strength can cause fraying of the carpet edges, fuzzing during wet cleaning or possibly delamination of the secondary backing from the carpet that result in carpet buckling. Such surface changes in carpet are undesirable and can reduce the useful lifetime of the carpet.

For the carpet precoat compositions, the physical properties of the binders are important to their successful utilization as carpet coatings. In this regard, there are a number of important requirements which must be met by such coatings. The coating must be capable of being applied to the carpet and dried using the processes and equipment conventionally employed in the carpet industry. The precoat composition must provide excellent adhesion to the pile fibers to secure them firmly in the backing. The precoat composition also must provide an excellent adhesion to all other parts of a carpet structure, such as any additional backings and adhesive layers present in the carpet structure.

Accordingly, there is still a need to obtain carpet precoat compositions that when applied to a carpet structure result in improved wet delamination strength of the carpet structure. There is a further need to obtain carpets and carpet products exhibiting improved wet delamination strength of the carpet and carpet product. Still further, there is a need for the manufacture of a carpet or a carpet product that exhibits an improved wet delamination strength. These needs and other needs are at least partially satisfied by the present invention.

### SUMMARY OF THE INVENTION

In accordance with the purpose(s) of the invention, as embodied and broadly described herein, the invention relates to a carpet composition comprising: a) a primary backing having a face side and a back side; b) a plurality of fibers attached to the primary backing material and extending from the face side of the primary backing material and exposed at the back side of the primary backing material; and c) a layer of an inventive precoat composition, as defined in claim 1, applied to the backside of the primary backing material.

Further disclosed herein is a method of making carpet compositions comprising inventive precoat compositions.

Additional aspects of the invention will be set forth, in part, in the detailed description, and claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

**FIGURE 1** shows an exemplary carpet structure.
**FIGURE 2** shows results of dry and wet delamination test according to ASTM D-3936 performed on a carpet comprising an inventive precoat composition.
**FIGURE 3** shows results of dry and wet tuft-bind test according to ASTM D-1335 performed on a carpet comprising an inventive precoat composition.
**FIGURE 4** shows results of dry and wet VELCRO^{®} test performed on a carpet comprising an inventive precoat composition.

### DETAILED DESCRIPTION OF THE INVENTION

The present invention can be understood more readily by reference to the following detailed description, examples, drawings, and claims, and their previous and following description. However, before the present compositions, articles, devices, systems, and/or methods are disclosed and described, it is to be understood that this invention is not limited to the specific compositions, articles, devices, systems, and/or methods disclosed unless otherwise specified, as such can, of course, vary. It is also to be understood that the terminology used herein is for the purpose of describing particular aspects only and is not intended to be limiting.

The following description of the invention is also provided as an enabling teaching of the invention in its best, currently known aspect. To this end, those of ordinary skill in the relevant art will recognize and appreciate that changes and modifications can be made to the various aspects of the invention described herein, while still obtaining the beneficial results of the present invention. It will also be apparent that some of the desired benefits of the present invention can be obtained by selecting some of the features of the present invention without utilizing other features. Accordingly, those of ordinary skill in the relevant art will recognize that many modifications and adaptations to the present invention are possible and can even be desirable in certain circumstances and are thus also a part of the present invention. Thus, the following description is provided as illustrative of the principles of the present invention and not in limitation thereof.

Various combinations of elements of this disclosure are encompassed by this invention, e.g. combinations of elements from dependent claims that depend upon the same independent claim. Throughout the description the following conversions apply 1 cP=10-3 Pa.s, 1 "oz/square yard"=33.90 g/m², 1 "pounds"=0,453 kg , 1 "pounds/inch"=1,152 kg/cm.

It is also to be understood that the terminology used herein is for the purpose of describing particular aspects only and is not intended to be limiting. As used in the specification and in the claims, the term "comprising" may include the aspects "consisting of" and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used herein, the singular forms "a," "an" and "the" include plural referents unless the context clearly dictates otherwise. Thus, for example, reference to a "polymer" includes aspects having two or more polymers unless the context clearly indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "optional" or "optionally" mean that the subsequently described event or circumstance may or may not occur, and that the description includes instances where said event or circumstance occurs and instances where it does not.

"Carpet composition" as used herein includes various structures or forms of carpet floor coverings. For example, and without limitation, the term "carpet composition" includes carpet tiles, broadloom carpet, area rugs, and turfs. To that end, a "broadloom carpet" means a broadloom textile flooring product manufactured in roll form.

The definition of carpet composition herein does not include products that would be known to one of ordinary skill in the art as "resilient flooring." As an example, products that fall under the category of resilient flooring include, but are not limited to, linoleum, vinyl tiles, cork tiles, rubber tiles and floor mats.

As used herein, the term "by weight," when used in conjunction with a component, unless specially stated to the contrary is based on the total weight of the formulation or composition in which the component is included. For example, if a particular element or component in a composition or article is said to have 8 % by weight, it is understood that this percentage is in relation to a total compositional percentage of 100 %.

A weight percent of a component, or weight %, or wt. %, unless specifically stated to the contrary, is based on the total weight of the formulation or composition in which the component is included.

References in the specification and concluding claims to parts by weight of a particular element or component in a composition or article, denotes the weight relationship between the element or component and any other elements or components in the composition or article for which a part by weight is expressed. Thus, in a composition or a selected portion of a composition containing 2 parts by weight of component X and 5 parts by weight component Y, X and Y are present at a weight ratio of 2:5, and are present in such ratio regardless of whether additional components are contained in the composition.

In some instances, the parts per weight of a component is based on the weight of the composition "on a dry basis," and thus, refers to "dry parts," which indicates the parts per weight of the composition without water or any other liquid or fluid. For example, the composition of the precoat in a finished product can be expressed in the dry parts.

In other instances, the parts per weight of a component is based on the weight of the composition "on a wet basis," and thus, refers to "wet parts," which indicates the parts per weight of the composition in the presence of water or any other liquid or fluid as defined. For example, the composition of the precoat in a blended or compounded form can be expressed in the wet parts.

As used herein, the term "substantially," in, for example, the context "substantially free" refers to a composition having less than about 1 % by weight. This can include, for example, aspects of less than about 0.5 % by weight, less than about 0.1 % by weight, less than about 0.05 % by weight, or less than about 0.01 % by weight of the stated material, based on the total weight of the composition.

It is further understood that the term "substantially," when used in reference to an amount of composition or a component in a composition, refers to at least about 60% by weight, e.g., at least about 65%, at least about 70%, at least about 75%, at least about 80%, at least about 85%, at least about 90%, at least about 91 %, at least about 92%, at least about 93%, at least about 94%, at least about 95%, at least about 96%, at least about 97%, at least about 98%, at least about 99%, or about 100% by weight, based on the total weight of the composition, of a specified feature or component.

As used herein, the term "substantially," in, for example, the context "substantially identical reference composition," refers to a reference composition comprising substantially identical components in the absence of an inventive component. In another exemplary aspect, the term "substantially," in, for example, the context "substantially identical reference composition," refers to a reference composition comprising substantially identical components and wherein an inventive component is substituted with a common or conventionally known in the art component. For example, a substantially identical reference carpet composition can comprise a substantially identical plurality of reference fibers attached to the reference primary backing material and extending the face of the reference primary backing material and exposed at the back side of the reference primary backing material, a reference precoat composition comprising a substantially identical binder and a filler other than a kaolin clay slurry; and a substantially identical reference secondary backing material applied to a back surface of the reference precoat layer.

As used herein, the term "substantially," in, for example, the context "substantially similar wet and dry delamination strength," refers to values of wet delamination strength that are different from values of dry delamination strength by about 30 % or less, by about 20 % or less, by about 10 % or less, by about 5 % or less, by about 1 % or less, or by about 0.5 % or less.

The term "fiber" as used herein includes fibers of extreme or indefinite length (i.e. filaments) and fibers of short length (i.e., staple fibers).

The term "yarn" as used herein refers to a continuous strand or bundle of fibers.

As used herein, the term "copolymer" refers to a polymer formed from two or more different repeating units (monomer residues). By way of example and without limitation, a copolymer can be an alternating copolymer, a random copolymer, a block copolymer, or a graft copolymer.

The term "linear" as used to describe ethylene polymers is used herein to mean the polymer backbone of the ethylene polymer lacks measurable or demonstrable long chain branches, e.g., the polymer is substituted with an average of less than 0.01 long branch/1000 carbons.

The term "homogeneous ethylene polymer" as used to describe ethylene polymers is used in the conventional sense in accordance with the original disclosure by Elston in U.S. Pat. No. 3,645,992. As defined herein, homogeneous ethylene polymers include both substantially linear ethylene polymers and homogeneously branched linear ethylene.

Homogeneously branched ethylene polymer is homogeneous ethylene polymer that refers to an ethylene polymer in which the monomer or comonomer is randomly distributed within a given polymer or interpolymer molecule and wherein substantially all of the polymer or interpolymer molecules have substantially the same ethylene to comonomer molar ratio with that polymer or interpolymer.

Alternatively, homogeneously branched ethylene polymers can be defined as homogeneous ethylene polymers that possess short chain branches and characterized by a relatively high short chain branching distribution index (SCBDI) or relatively high composition distribution branching index (CDBI). That is, the ethylene polymer has a SCBDI or CDBI greater than or equal to 50 percent, greater than or equal to 70 percent, or greater than or equal to 90 percent and essentially lack a measurable high density (crystalline) polymer fraction.

In the aspects wherein the homogeneously branched ethylene polymers are characterized by the short chain branching distribution index or composition distribution branching index, the SCBDI or CDBI can be defined as the weight percent of the polymer molecules having a comonomer content within 50 percent of the median total molar comonomer content and represents a comparison of the comonomer distribution in the polymer to the comonomer distribution expected for a Bernoullian distribution. The SCBDI or CDBI of polyolefins can be conveniently calculated from data obtained from techniques known in the art, such as, for example, temperature rising elution fractionation (abbreviated herein as "TREF") as described, for example, by Wild et al., Journal of Polymer Science, Poly. Phys. Ed., Vol. 20, p. 441 (1982), L. D. Cady, "The Role of Comonomer Type and Distribution in LLDPE Product Performance," SPE Regional Technical Conference, Quaker Square Hilton, Akron, Ohio, Oct. 1-2, pp. 107-119 (1985), or in U.S. Pat. Nos. 4,798,081 and 5,008,204. In some aspects, the comonomer distribution of the polymer and SCBDI or CDBI are determined using ¹³CNMR analysis in accordance with techniques described, for example, in U.S. Pat. No. 5,292,845 and by J. C Randall in Rev. Macromol. Chem. Phys., C29, pp. 201-317.

In some aspects, the terms "homogeneously branched linear ethylene polymer" and "homogeneously branched linear ethylene/α-olefin polymer" means that the olefin polymer has a homogeneous or narrow short branching distribution but does not have long chain branching. That is, the linear ethylene polymer is a homogeneous ethylene polymer characterized by an absence of long chain branching. Such polymers can be made using polymerization processes (e.g., as described by Elston in U.S. Pat. No. 3,645,992) which provide a uniform short chain branching distribution (i.e., homogeneously branched). Homogeneously branched linear ethylene polymers are typically characterized as having a molecular weight distribution, M_{w}/Mₙ, of less than about 3, less than about 2.8, or less than about 2.3. Commercial examples of suitable homogeneously branched linear ethylene polymers include those sold by Mitsui Petrochemical Industries as Tafmer^{™} resins and by Exxon Chemical Company as Exact^{™} resins and Exceed^{™} resins. Alternatively, the terms "homogeneously branched linear ethylene polymer" and "homogeneously branched linear ethylene/α-olefin polymer" means that the olefin polymer has a relatively high SCBDI or CDBI.

The terms "homogeneous linearly branched ethylene polymer" or "homogeneously branched linear ethylene/α-olefin polymer" do not refer to high pressure branched polyethylene which is known to those skilled in the art to have numerous long chain branches. The term "homogeneous linear ethylene polymer" generically refers to both linear ethylene homopolymers and to linear ethylene/α-olefin interpolymers. A linear ethylene/α-olefin interpolymer possesses short chain branching and the α-olefin is typically at least one C₃-C₂₀ α-olefin (e.g., propylene, 1-butene, 1-pentene, 4-methyl-1-pentene, 1-hexene, and 1-octene). In other aspects the polyethylenes that are suitable for use in the present invention are interpolymers of ethylene with at least one C₃-C₂₀ α-olefin and/or C₄ -C₁₈ diolefin. Copolymers of ethylene and α-olefin of C₃-C₂₀ carbon atoms can be used.

The term "interpolymer" is used herein to indicate a copolymer, or a terpolymer, or the like, where at least one other comonomer is polymerized with ethylene to make the interpolymer. Suitable unsaturated comonomers useful for polymerizing with ethylene include, for example, ethylenically unsaturated monomers, conjugated or non-conjugated dienes, polyenes, *etc.* Examples of such comonomers include C₃-C₂₀ α-olefins as propylene, isobutylene, 1-butene, 1-hexene, 4-methyl-1-pentene, 1-heptene, 1-octene, 1-nonene, 1-decene, 1,9-decadiene and the like. Other suitable monomers include styrene, halo- or alkyl-substituted styrenes, tetrafluoroethylene, vinylbenzocyclobutane, 1,4-hexadiene, 1,7-octadiene, and cycloalkenes, e.g., cyclopentene, cyclohexene and cyclooctene.

When used in reference to an ethylene homopolymer (i.e., a high density ethylene polymer not containing any comonomer and thus no short chain branches), the term "homogeneous ethylene polymer" or "homogeneous linear ethylene polymer" means the polymer was made using a homogeneous catalyst system such as, for example, that described Elston or Ewen or those described by Canich in U.S. Pat. Nos. 5,026,798 and 5,055,438, or by Stevens et al. in U.S. Pat. No. 5,064,802, the disclosures of all three of which are incorporated herein by reference.

The terms "substantially linear ethylene polymer" or "SLEP," are used interchangeably, and refer specifically to homogeneously branched ethylene polymers that have long chain branching. The term does not refer to heterogeneously or homogeneously branched ethylene polymers that have a linear polymer backbone. For substantially linear ethylene polymers, the long chain branches have the same comonomer distribution as the polymer backbone, and the long chain branches can be as long as about the same length as the length of the polymer backbone to which they are attached. The polymer backbone of substantially linear ethylene polymers is substituted with about 0.01 long chain branches/1000 carbons to about 3 long chain branches/1000 carbons, from about 0.01 long chain branches/1000 carbons to about 1 long chain branches/1000 carbons, and from about 0.05 long chain branches/1000 carbons to about 1 long chain branches/1000 carbons.

Long chain branching is defined herein as a chain length of at least 6 carbons, above which the length cannot be distinguished using ¹³C nuclear magnetic resonance spectroscopy. The presence of long chain branching can be determined in ethylene homopolymers by using ¹³C nuclear magnetic resonance (NMR) spectroscopy and is quantified using the method described by Randall (Rev. Macromol. Chem. Phys., C29, V. 2&3, p. 285-297).

Substantially linear ethylene polymers are homogeneously branched ethylene polymers and are disclosed in U.S. Pat. No. 5,272,236 and U.S. Pat. No. 5,278,272. Homogeneously branched substantially linear ethylene polymers are available from The Dow Chemical Company as AFFINITY^{™} polyolefin plastomers and from Dupont Dow Elastomers JV as ENGAGE^{™} polyolefin elastomers. Homogeneously branched substantially linear ethylene polymers can be prepared via the solution, slurry, or gas phase polymerization of ethylene and one or more optional α-olefin comonomers in the presence of a constrained geometry catalyst, such as the method disclosed in European Patent Application 416,815-A. In some aspects, a solution polymerization process is used to manufacture the substantially linear ethylene polymer used in the present invention.

The term "heterogeneously branched ethylene polymer" refers to a polymer having a distribution of branching different from and broader that the homogeneous branching ethylene /α-olefin interpolymer at similar molecular weight. In further aspects, the "heterogeneous" and "heterogeneously branched" mean that the ethylene polymer is characterized as a mixture of interpolymer molecules having various ethylene to comonomer molar ratios. Alternatively, heterogeneously branched linear ethylene polymers can be defined as having a SCBDI less than about 50 % and more typically less than about 30 %. HBEPs and SLEPs also differ from the class of polymers known conventionally as heterogeneously branched traditional Ziegler polymerized linear ethylene interpolymers, for example, ultra low density polyethylene ("ULDPE"), very low density polyethylene ("VLDPE"), linear low density polyethylene ("LLDPE") medium density polyethylene ("MDPE") or high density polyethylene ("HDPE") made, for example, using the technique disclosed by Anderson et al. in U.S. Patent. No. 4,076,698, in that substantially linear ethylene interpolymers are homogeneously branched interpolymers. Further, in accordance with the present invention, the polymer composition does not comprise more than 20 % by weight of heterogeneously branched linear ethylene polymers, as measured by the total weight of the polymer composition.

Heterogeneously branched ethylene polymers are typically characterized as having molecular weight distributions, M_{w}/Mₙ in the range of from about 3.5 to about 4.1 and, as such, are distinct from substantially linear ethylene polymers and homogeneously branched linear ethylene polymers in regards to both compositional short chain branching distribution and molecular weight distribution.

The substantially linear ethylene polymers useful in this invention have excellent processability, even though they have relatively narrow molecular weight distributions (MWDs). Furthermore, the melt flow ratio (I₁₀/I₂) of the substantially linear ethylene polymers can be varied essentially independently of the polydispersity index (i.e., molecular weight distribution (M_{w}/Mₙ)). This is contrasted with conventional heterogeneously branched linear polyethylene resins which have rheological properties such that as the polydispersity index increases, the I₁₀/I₂ value also increases. The rheological properties of substantially linear ethylene polymers also differ from homogeneously branched linear ethylene polymers which have relatively low, essentially fixed I₁₀/I₂ ratios.

HBEPs and SLEPs also differ significantly from the class known as free-radical initiated highly branched high pressure low density ethylene homopolymer and ethylene interpolymers such as, for example, ethylene-acrylic acid (EAA) copolymers and ethylene-vinyl acetate (EVA) copolymers, in that substantially linear ethylene polymers do not have equivalent degrees of long chain branching and are made using single site catalyst systems rather than free-radical peroxide catalyst systems. In accordance with the present invention, the polymer composition does not comprise more than 20 % by weight of free-radical initiated highly branched high pressure low density ethylene homopolymer and ethylene interpolymers, as measured by the total weight of the polymer composition, exclusive of any adhesive polymer that contains such homopolymers and interpolymers (as discussed in more detail below).

As described herein, in some aspects to determine the wet and/or dry strength, the Tuft Bind Test according to ASTM D-1335 is used. The Tuft Bind Test determines the amount of force that is necessary to pull the yarn from its primary backing. It is desirable to obtain carpets with highest tuft bind values possible. It is understood that the carpet that withstands a high amount of force lasts longer, and the original appearance is preserved due to fewer snags.

As described herein, in some aspects to determine the wet and/or dry strength, the VELCRO@ test is used. The VELCRO@ test utilizes VELCRO@ tester to measure the carpet composition strength. VELCRO is a registered trademark for the well-known hook and loop fastening material. In the VELCRO^{®} test, a two pound roller approximately three-and-a-half inches wide and one-and-a-half inches in diameter coated with VELCRO@ hook material is rolled repeatedly over the loop pile of the carpet, for example, ten times. The carpet is then inspected for protruding fibers or fuzz. By "fuzz," it is meant short, individual filaments (often 1-3 stitch lengths long) removed from fiber bundles.

It is known that precoat adhesives, if properly applied, can provide sufficient binding of carpet fibers to permit manufacture of loop pile carpets which can pass the VELCRO^{®} test. It is important that any proposal to replace the use of conventional adhesives be likewise capable of producing a carpet in which the face yarn or fibers are securely attached to the carpet.

As described herein, in some aspects to determine the wet and/or dry strength, delamination strength test according to ASTM D-3936 is utilized. The delamination strength test is design to measure an amount of force needed to remove a secondary backing from the carpet composition. The strength according to ASTM D-3936 is measured by determining the highest peak for each of the middle five inches of 6" pull (jaw separation) and averaging the values. It is further understood that the higher amount of force needed to remove a secondary backing from the carpet composition, the greater the carpet's durability is expected.

In some exemplary aspects, to measure a wet delamination the sample is soaked in a liquid for a first predetermined time, dried for a second predetermined time, and then measured to determine the delamination strength. In some aspects, the first predetermined time and a second predetermined time can be same or different. In other aspects, the first or second predetermined time can be from greater than 0 min to about 120 minutes, including exemplary values of about 5 min, about 10 min, about 20 min, about 30 min, about 40 min, about 50 min, about 60 min, about 70 min, about 80 min, about 90 min, about 100 min, and about 110 min. In other exemplary aspects, to measure a wet delamination the sample is stored in the Environmental Chamber for 24 hours at 90 ° F and 90 % relative humidity and then measured to determine the delamination.

As described herein, in some aspects to determine the wet and/or dry delamination strength a test Area Under the Curve developed by Shaw Industries is utilized. According to the Area Under the Curve test, the samples are prepared and pulled similarly to the preparation techniques according to ASTM D-3936. To calculate the delamination strength the entire pull area is included. The delamination strength is calculated under the curve starting at the first 0.5" and ending at 5.5' of jaw separation.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

### A. PRECOAT COMPOSITION

The present invention may be understood more readily by reference to the following detailed description of various aspects of the invention and the examples included therein and to the Figures and their previous and following description.

In some aspects, described herein is a carpet comprising: a precoat composition comprising a blend of: a) a binder; and b) from 20 to 90% by weight of a filler comprising a kaolin clay slurry, and c) from greater than 0% to 10% by weight of a tackifier, wherein the kaolin clay slurry has a total solids content in the range of from about 60 to 80% and wherein the precoat composition has a total solids content in the range of from about 50 % to about 90 %.

In some aspects, the kaolin clay slurry can have a total solids content in the range of from about 40 to about 90 %, including exemplary values of about, about 45 %, about 50 %, about 55 %, about 60 %, about 65 %, about 70 %, about 75 %, about 80 %, and about 85 %. In some other aspects, the kaolin clay slurry can have a total solids content in the range from about 40 % to about 60 %, from about 60 % to about 80 %, or from about 65 % to about 85 %. It is understood that a total solids content is controlled by an amount of a liquid medium present in the kaolin clay slurry. In some exemplary aspects, the liquid medium comprises water. In yet other aspects, any liquid medium known in the art and capable of making a dispersion or a slurry with the kaolin clay can be utilized. In some aspects, liquid medium can be nonaqueous. In yet other aspects, the slurry can comprise plasticizers.

In some other aspects, the precoat composition disclosed herein can have a total solids content in the range of from about 50 % to about 90 %, including exemplary value of about 55 %, about 60 %, about 65 %, about 70 %, about 75 %, about 80 %, and about 85 %. In yet other aspects, the precoat composition can have a total solids content in the range from about 40 % to 60 %, or from about 65 % to about 85 %.

In some aspects, the binder of the inventive precoat composition can be made from various polyolefin materials such as, for example and without limitation, ethylene acrylic acid (EAA), ethylene vinyl acetate (EVA), polypropylene or polyethylene (e.g., low density polyethylene (LDPE), linear low density polyethylene (LLDPE) or substantially linear ethylene polymer, or mixtures thereof). In some aspects, the binder can comprise latex. It is further contemplated that the binder in the precoat composition can be selected from a group comprising, without limitation, an EVA hotmelt, a vinyl acetate ethylene (VAE) emulsion, carboxylated styrenebutadiene (XSB) latex copolymer, a styrene- butadiene resin (SBR) latex, a BDMMA latex, an acrylic latex, an acrylic copolymer, a styrene copolymer, butadiene acrylate copolymer, a polyolefin hotmelt, polyurethane, polyolefin dispersions and/or emulsions, and any combination thereof.

In yet other aspects, the binder comprises one or more of latex, vinyl acetate ethylene (VAE) copolymers, styrene butadiene (SBR) copolymers, carboxylated styrene butadiene, butadiene methyl methacrylate (BDMMMA), styrene acrylics, vinyl acrylics, ethylene vinyl acetate copolymers, a thermoplastic dispersion, or any combinations thereof. In yet other aspects, the binder is substantially free of polyurethane.

In certain aspects, the thermoplastic dispersion can comprise a dispersion of a propylene block copolymer, ethylene block copolymer, or a combination thereof. In some aspects, the thermoplastic dispersion can comprise more than one polyolefin. In certain aspects, the polyolefins can comprise alpha-olefin polymers and copolymers, such as ethylene alpha-olefin copolymers and propylene alpha-olefin copolymers. In some aspects, the thermoplastic dispersion can comprise ethylenepropylene-diene terpolymers. In certain aspects, the polyolefins can include high density polyethylenes ("HDPE"), heterogeneously branched linear low density polyethylenes ("LLDPE"), heterogeneously branched ultra low linear density polyethylenes ("ULDPE"), homogeneously branched, linear ethylene/alpha-olefin copolymers ("HBPE"); homogenously branched, substantially linear ethylene/alpha-olefin copolymers ("SLEP"); high pressure, free radical polymerized ethylene polymers and copolymers such as low density polyethylenes. ("LDPE"). In some aspects, the thermoplastic comprise polymeric units derived from one or more alpha-olefin comonomers. Exemplary comonomers can include C₂, and C₄ to C₁₀ alpha-olefins, for example: C₂, C₄, C₆, and C₈ alpha-olefins.

In some aspects, the thermoplastic dispersions can comprise a polymer blend. In some embodiments, the blend may comprise two different Ziegler-Natta polymers. In other embodiments, the blend may comprise a Ziegler- Natta polymer and a metallocene polymer. In still other embodiments, the blend may comprise two different metallocene polymers.

In some further aspects, the thermoplastic dispersions can further comprise a stabilizing agent, such as a surfactant, a polymer having a polar group as wither a comonomer or a grafted monomer, and mixtures thereof. Examples of surfactants that can be useful as a stabilizing agent include cationic surfactants, anionic surfactants, and no-ionic surfactants. In certain aspects, an optional base can be included in the thermoplastic dispersion. Examples of bases that can be used include alkaline metals and alkaline earth metals, inorganic amines; oxides, hydroxide and hydride of alkaline metals and alkaline earth metals; and weak acid salts of alkaline metals and alkaline earth metals.

In some aspects, the binder present in the inventive precoat composition is a vinyl acetate ethylene emulsion. In certain aspect, the binder can be present in an amount in the range of from about 20 % to about 90 % by weight of the composition, including exemplary values of about 25 %, about 30 %, about 35 %, about 40 %, about 45 %, about 50 %, about 55 %, about 60 %, about 65 %, about 70 %, about 80 %, and about 85 %. In yet other aspects, the binder can be present in an amount in the range from about 25 % to about 50 %, or from about 40 % to about 70 %. In yet other aspects, the binder is present in an amount in the range from about 25 % to about 50 %, or from about 40 % to about 70 %.

The filler is present in an amount from about 20 % to about 90 % by weight of the precoat composition, including exemplary values of about 25 %, about 30 %, about 35 %, about 40 %, about 45 %, about 50 %, about 55 %, about 60 %, about 65 %, about 70 %, about 75 %, about 80 %, and about 85 %. In yet other aspects, the filler can be present in any amount from about 25 % to about 50 %, from about 45 % to about 85 %, or from about 55 % to about 90 %.

In some aspects, the kaolin clay slurry present in the filler comprises a plurality of particles having a particle size from about 0.1 to about 5 Stoke equivalent microns (µm), including exemplary values of about 0.2 µm, about 0.3 µm, about 0.4 µm, about 0.5 µm, about 0.6 µm, about 0.7 µm, about 0.8 µm, about 0.9 µm, about 1.0 µm, about 1.5 µm, about 2.0 µm, about 2.5 µm, about 3.0 µm, about 3.5 µm, about 4.0 µm, and about 4.5 µm. It should be appreciated that Kaolin clays having the desired properties and characteristics are commercially available.

The filler comprises a kaolin clay. In yet other aspects, the kaolin clay can comprise a plurality of particles, wherein each of the plurality of particles is surface modified. In some aspects, the each of the plurality of particles is surface modified by calcination. In yet other aspects, the each of the plurality of particles is surface modified by utilizing a coupling agent, for example and without limitation silane. In some other aspects, silane coupling agent can be functionalized by mercapto-, polysulfide-, amino- and vinyl- groups. It is further understood that any known in the art coupling agent can be used to surface modify kaolin particles. In yet some other aspects, the each of the plurality of particles can be surface modified both by calcination and use of a coupling agent.

In some aspects, the filler in the precoat composition can further comprise additional fillers. In some aspects, the additional fillers can be derived from any recycled compositions. In certain aspects, the additional fillers can be derived from recycled carpet content. In yet other aspects, the additional fillers can be derived from recycled asphalt content. In yet other aspects, the additional fillers can be derived from any recycled composition that can provide a substantial amount of inorganic material that can be utilized as a filler. In some aspects, the filler comprises a recycled calcium carbonate.

In certain aspects, exemplary and non-limiting fillers that can be also present in the inventive precoat composition can include calcium carbonate, flyash, residual by products from the depolymerization of Nylon 6 (also referred to as ENR co-product), recycled calcium carbonate (e.g., reclaimed calcium carbonate), aluminum trihydrate, talc, nano-clay, barium sulfate, barite, barite glass fiber, glass powder, glass cullet, metal powder, alumina, hydrated alumina, clay, magnesium carbonate, calcium sulfate, silica, glass, fumed silica, carbon black, graphite, cement dust, feldspar, nepheline, magnesium oxide, zinc oxide, aluminum silicate, calcium silicate, titanium dioxide, titanates, glass microspheres, chalk, calcium oxide, and any combination thereof, in addition to the inorganic materials present in the inorganic filler composition discussed above.

In yet other aspects, the filler can further comprise one or more of calcium carbonate, aluminum trihydrate, barite, feldspar, cullet, fly ash, kaolin clay, limestone, asphalt, or any combination thereof. In some other aspects, the filler can further comprise bentonite, montmorillonite, attapulgite clays, or any combination thereof. In yet other aspects, kaolin clay can be substituted or used in combination with bentonite, montmorillonite, or attapulgite clays.

In yet other aspects, the filler further comprises calcium carbonate. In yet other aspects, the filler can further comprise calcium carbonate and aluminum trihydrate. In certain aspects, the filler comprises calcium carbonate and kaolin clay slurry. In yet other aspects, the filler comprises calcium carbonate, kaolin clay slurry and aluminum trihydrate. In some aspects, the calcium carbonate and kaolin clay slurry are present in the fillers in a substantially equal amount when measured in dry parts based on 100 dry parts of the binder. In other aspects, the calcium carbonate and kaolin clay slurry are present in the filler in any ratio when measured in dry parts based on 100 dry parts of the binder. In some aspects, the calcium carbonate and kaolin clay slurry are present in the filler in a ratio of 1:1, 1:2, 1:3, 1:4, 1:5, 1:6, 1:7, 1:8, 1:9, 1:10, 10:1, 9:1, 8:1, 7:1, 6:1, 5:1, 4:1, 3:1, or 2:1, when measured in dry parts based on 100 dry parts of the binder.

In certain aspect, the inventive precoat composition can further comprise one or more flame retardants. Exemplary flame retardants that can be present in the precoat composition include, without limitation, organo-phosphorous flame retardants, red phosphorous magnesium hydroxide, magnesium dihydroxide, hexabromocyclododecane, bromine containing flame retardants, brominated aromatic flame retardants, melamine cyanurate, melamine polyphosphate, melamine borate, methylol and its derivatives, silicon dioxide, calcium carbonate, resourcinol bis-(diphenyl phosphate), brominated latex base, antimony trioxide, strontium borate, strontium phosphate, monomeric N-alkoxy hindered amine (NOR HAS), triazine and its derivatives, high aspect ratio talc, phosphated esters, organically modified nanoclays and nanotubes, non-organically modified nanoclays and nanotubes, ammonium polyphosphate, polyphosphoric acid, ammonium salt, triaryl phosphates, isopropylated triphenyl phosphate, phosphate esters, magnesium hydroxide, zinc borate, bentonite (alkaline activated nanoclay and nanotubes), organoclays, aluminum trihydrate (ATH), azodicarbonamide, diazenedicarboxamide, azodicarbonic acid diamide (ADC), triaryl phosphates, isopropylated triphenyl phosphate, triazine derivatives, alkaline activated organoclay and aluminum oxide. Any desired amount of flame retardant can be used in the precoat composition and the selection of such amount will depend, in part, upon the particular flame retardant used, as well as the desired level of flame retardance to be achieved. Such amounts can be readily determined through no more than routine experimentation.

In still a further aspect, the precoat composition can further comprise other ingredients. For example, a surfactant can be included in the inventive precoat composition. Suitable surfactants can include, for example and without limitation, nonionic, anionic, cationic and fluorosurfactants. In certain aspects, the surfactant is present in an amount from greater than 0 % to about 5 % by weight based on the total weight of the composition. In yet other aspects, the surfactant is present in exemplary amounts such as about 0.01 %, about 0.05 %, about 0.1 %, about 0.5 %, about 1 %, about 1.5 %, about 2 %, about 2.5 %, about 3 %, about 3.5 %, about 4 %, and about 4.5 %. In yet other aspects, the surfactant can be present in an amount from greater than 0 % to about 4 %, or from about 0.05 % to about 4.5 %.

In another example, the precoat composition can further comprise a rheology agent, a defoaming agent, and/or a dispersion enhancer. In some aspect, the rheology agent comprises a thickener. In these aspects, the thickener helps to provide a suitable viscosity to the dispersion. For example, the thickener can exemplarily comprise sodium and ammonium salts of polyacrylic acids. In some aspects, the rheology agent is present in an amount from greater than 0 % and about 5 % based on the total weight of the precoat composition, including exemplary values of about 0.01 %, about 0.05 %, about 0.1 %, about 0.5 %, about 1 %, about 1.5 %, about 2 %, about 2.5 %, about 3 %, about 3.5 %, about 4 %, and about 4.5 %. In yet other aspects, the rheology agent can be present in an amount from greater than 0 % to about 2 %, or from about 0.05 % to about 4 %.

In other aspects, the defoaming agent can, without limitation, be a non-silicone defoaming agent and is present in an amount between greater than 0 % and about 5.0 % based on the total weight of the precoat composition, including exemplary values of about 0.01 %, about 0.05 %, about 0.1 %, about 0.5 %, about 1 %, about 1.5 %, about 2 %, about 2.5 %, about 3 %, about 3.5 %, about 4 %, and about 4.5 %. In yet other aspects, the defoaming agent can be present in an amount from greater than 0 % to about 4 %, or from about 0.05% to about 4.5 %. An exemplified dispersion enhancer can be a fumed silica that acts as a compatibilizer for the dispersion. In these aspects, the fumed silica can be present at between about 0.1 % and about 0.2 % percent based on the total weight of the precoat composition.

The inventive precoat composition further comprises one or more tackifying additives. The tackifier can for example be tall oil or rosin based or, alternatively, can be an aliphatic or aliphatic aromatic hydrocarbon blend resin. The tackifier is present in the range of from greater than 0 weight percent up to 10% by weight of the total precoat composition.

In yet other aspects, the precoat composition can comprise a surfactant, a rheology agent, a tackifier, or a combination thereof. In the aspects where the surfactant, the rheology agents, and the tackifiers are present, the amounts of the each component can be in any value from any range described above.

In some other aspects, the precoat composition can further comprise wax. In some aspects, wax comprises petroleum based waxes, animal based waxes, plant based waxes, or any combination thereof. In some aspects, wax present in the precoat composition as a fine homogeneous dispersion in a liquid medium. In some aspects, the liquid medium is water. In another aspect, the liquid medium is any medium known in the art capable of forming a dispersion with wax. Without wishing to be bound by any theory, it is hypothesized that wax presence in the precoat composition can impart some hydrophobicity to reduce moisture penetration or spill through the product.

In some aspects, the inventive precoat composition can exhibit stable properties both when cold blended or hot blended. As used herein, a "cold blend" precoat composition refers to a precoat composition that has been blended at mild refrigeration. In some exemplary aspects, the cold blend precoat composition refers to the precoat composition blended at a temperature from about 30 ° F to about 50 ° F, including exemplary values of about 35 ° F, about 40 ° F, and about 45 ° F. In some aspects, the inventive precoat exhibits stable properties when stored at mild refrigeration. In yet other aspects, the inventive precoat exhibits stable properties when stored in a cold climate.

As used herein, a "hot blend" precoat composition refers to a precoat composition has been blended at mildly elevated temperatures. In some exemplary aspects, the hot blend composition refers to the precoat composition blended at a temperature from about 80 ° F to about 150 ° F, including exemplary values of about 85 ° F, about 90 ° F, about 100 ° F, about 105 ° F, about 110 ° F, about 115 ° F, about 120 ° F, about 125 ° F, about 130 ° F, about 135 ° F, about 140 ° F, and about 145 ° F. In some aspects, the inventive precoat exhibits stable properties when stored at elevated temperatures. In yet other aspects, the inventive precoat exhibits stable properties when stored in a warm climate.

In some aspects, the precoat composition, cold or hot blended can exhibit a viscosity in the range from about 2,000 to about 15,500 cP when measured at 20 rpm, including exemplary values of about 2,500 cP, about 3,000 cP, about 3,500 cP, about 4,000 cP, about 4,500 cP, about 5,000 cP, about 5,500 cP, about 6,000 cP, about 6,500 cP, about 7,000 cP, about 7,500 cP, about 8,000 cP, about 8,500 cP, about 9,000 cP, about 9,500 cP, about 10,000 cP, about 10,500 cP, about 11,000 cP, about 11,500 cP, about 12,000 cP, about 12,500 cP, about 13,000 cP, about 13,500 cP, about 14,000 cP, about 14,500 cP, and about 15,000 cP. In yet other aspects, the precoat composition exhibits a viscosity from about 2,500 cP to about 4,500 cP, or from about 3,500 cP to about 5,500 cP when measured at 20 rpm.

In yet other aspects, the inventive precoat composition can exhibit a viscosity after a storage period of at least 3 days, at least one week, at least 2 weeks, or at least one month that is within +/- 20% of an initial viscosity measured before the storage period. In yet other aspects, the inventive precoat composition can exhibit a viscosity after a storage period of at least 3 days, at least one week, at least 2 weeks, or at least one month that is within +/- 10% of an initial viscosity measured before the storage period. In yet other aspects, the precoat composition can exhibit a viscosity after a storage period of at least 3 days, of at least one week, at least 2 weeks, or at least one month that is within +/- 5% of an initial viscosity measured before the storage period. It is understood that in some aspects, a storage period of the inventive precoat composition can be determine by a possible microbial decomposition of the composition.

In some exemplary aspects, the inventive precoat composition can comprise a blend comprising: a) from 25% to 60% by weight of binder; b) from 30 % to 70% by weight of filler comprising kaolin clay slurry; c) from greater than 0% to 4% surfactant; d) from greater than 0 to 2 % rheology agent; and e) from greater than 0 to 10% tackifier. In yet other aspects, the blend can further comprise any of disclosed above additional additives, for example, and without limitation it can further comprises, flame retardants, surfactants, rheology agents, defoaming agents, colors, pigments, waxes, and the like.

### B. CARPETS

In certain aspects, the present disclosure pertains to any carpet constructed with a primary backing component and includes tufted carpet and non-tufted carpet such as needle punched carpet. To form the tufted carpet, yarn is tufted through the primary backing component such that the longer length of each stitch extends through the face surface of the primary backing component.

In some aspects, the plurality of fibers are present in yarn. In other aspects, the plurality of fibers are present as separate fibers. In some aspects, the plurality of fibers form tufts. In some aspects, a portion of the plurality of the fibers is exposed at the back surface of the primary backing component. In yet other aspects, a portion of the plurality of the fibers are exposed at the back surface of the primary backing component in a form of back stitches.

In some aspects, the plurality of fibers can comprise a polyamide, an olefin, or a polyester. The term "polyamide," as utilized herein, is defined to be any long-chain polymer in which the linking functional groups are amide (-CO-NH-) linkages. The term polyamide is further defined to include copolymers, terpolymers and the like as well as homopolymers and also includes blends of two or more polyamides. In some aspects, the plurality of polyamide fibers comprise one or more of nylon 6, nylon 66, nylon 10, nylon 612, nylon 12, nylon 11, or any combination thereof. In other aspects, the plurality of polyamide fibers comprise nylon 6 or nylon 66. In yet other aspects, the plurality of polyamide fibers are nylon 6. In a yet further aspect, the plurality of polyamide fibers are nylon 66.

In certain aspects, the plurality of fibers comprise a polyester. The term "polyester fiber" as utilized herein, refers to the manufactured fiber in which the fiber forming substance is any long-chain synthetic polymer composed of at least 85% by weight of an ester of a substituted aromatic carboxylic acid, including but not restricted to substituted terephthalic units, p(-R-O-CO- C₆H₄-CO-O-)ₓ and parasubstituted hydroxy-benzoate units, p(-R-O-CO-C₆H₄-O-)ₓ. In some aspects, the plurality of the polyester fibers comprise polyethylene terephthalate (PET) homopolymers and copolymers, polybutylene terephthalate (PBT) homopolymers and copolymers, and the like, including those that contain comonomers such as cyclohexanedimethanol, cyclohexanedicarboxylic acid, and the like.

In yet further aspects, the plurality of fibers can comprise a polyolefin fiber. As defined herein, the term "polyolefin" refers to any class of polymers produced from a simple olefin (also called an alkene with the general formula CₙH₂ₙ) as a monomer. In some aspects, the polyolefins which can be used to produce the yarn and fibers include, but are not limited to, polyethylene, polypropylene, both homopolymer and copolymers, poly(I-butene), poly(3-methyl-I-butene), poly(4-methyl- 1-pentene) and the like, as well as combinations or mixtures of two or more of the foregoing. In certain aspects, the plurality of the polyolefin fibers comprise polyethylene or polypropylene. In other aspects, the plurality of the polyolefin fibers comprise polyethylene. In yet other aspects, the plurality of the polyolefin fibers comprise polypropylene.

In yet further aspect, the plurality of fibers can further comprise natural fibers, acrylics, viscose, rayon, cellulose acetate, linen, silk, cotton, wool, or any combination thereof.

As understood by one of ordinary skill in the art, the plurality of fibers can comprise any types of fibers. For example, and without limitation, the plurality of fibers can comprise staple fibers or bulked continuous filament fibers.

In certain aspects, described herein is a carpet composition comprising a) a primary backing having a face side and a back side; b) a plurality of fibers attached to the primary backing material and extending from the face side of the primary backing material and exposed at the back side of the primary backing material; and c) a layer of the inventive precoat composition as described above that is applied to the back side of the primary backing material.

In certain aspects, the inventive precoat layer is applied to a back surface of the primary backing component. The layer of the inventive precoat composition can be used to lock the plurality of fibers or tufts in place. In some aspects, the inventive precoat layer can provide additional strength to the tufts (so-called tuft bind strength). In yet other aspects, the precoat layer can be used to substantially prevent any additional adhesive compositions from penetration through (the openings between) the plurality of fibers (the tufts) in the direction of the carpet top face.

In certain aspects, the primary backing component comprises a polyolefin, a polyester, a polyamide, or a combination thereof. The primary backing component can be woven and non-woven. In certain aspects, the primary backing component can comprise non-woven webs, or spunbonded materials. In some aspects, the primary backing component can comprise a combination of woven and non-woven materials. In some aspects, the primary backing component comprises a polyolefin polymer. In other aspects, the polyolefin polymer comprises polypropylene. In yet other aspects, the primary backing component is a slit film polypropylene sheet such as that sold by Propex or Synthetic Industries owned by Shaw Industries. In yet further aspects, the primary backing component can comprise polyester. In still further aspect, the primary backing component can comprise polyamide. In yet further aspects, the primary backing component can comprise a combination of polyamide and polyester. In the certain aspects, the polyamide is nylon. In some other aspects, the primary backing can comprise a woven polyethylene terephthalate (PET). In yet other aspects, the primary backing can comprise a woven PET having a post-consumer and/or post-industrial content.

In certain aspects, the primary backing component is a spun-bond primary backing component. The spun bond backing can be produced by depositing extruded, spun filaments onto a collecting belt in a uniform random manner followed by bonding the fibers. The fibers are separated during the web laying process by air jets or electrostatic charges. The collecting surface is usually perforated to prevent the air stream from deflecting and carrying the fibers in an uncontrolled manner. Bonding imparts strength and integrity to the web by applying heated rolls or hot needles to partially melt the polymer and fuse the fibers together. Since molecular orientation increases the melting point, fibers that are not highly drawn can be used as thermal binding fibers. In some aspect, the spun-bond primary backing component can comprise a bi-component filament of a sheath-core type. In some aspects, the polymeric core component can have a higher melting point than the polymeric sheath component. In some aspects, the polymeric core component can comprise polyester, aliphatic polyamides, polyphenylene oxide and/or co-polymers or blends thereof. In yet other aspects, the polyester can comprise polyethylene terephthalate, polybutylene terephthalate, or polyparaphenylene terephthalamide. In yet other aspects, the polymeric core comprises polyethylene terephthalate. In further aspects, the sheath polymer can comprise a polyamide, polyethylene, or polyester. In yet further aspects, the sheath polymer comprises nylon. In still further aspects, the sheath-core primary backing component comprises a polyester as a core component and nylon as a sheath component. The exemplary sheath-core primary backing component can be commercially available from Bonar. In yet other aspects, a polyester non-woven primary backing can be commercially available from Freudenberg.

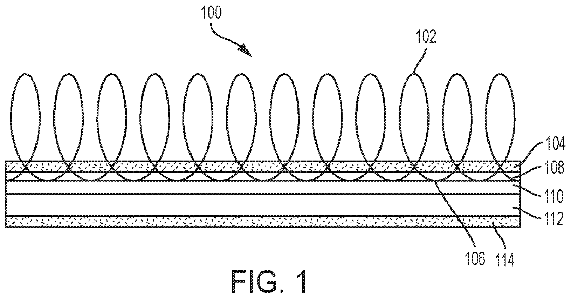

In some aspects, the carpet composition described herein can further comprise a secondary backing material applied to a back surface of the precoat layer formed from the inventive precoat composition. The exemplary carpet composition is depicted on **FIG.1. FIG.** 1 schematically shows an exemplary aspect of this invention. Specifically, **FIG.1** demonstrates an exemplary carpet composition **100** disclosed herein. A plurality of fibers **102** is attached to or tufted into a primary backing component **104** and is extending from a face surface of the primary backing component. A portion of the plurality of fibers is exposed at a back surface of the primary backing component in the form of back stitches **106.** A precoat layer **108** formed from the disclosed inventive precoat composition is applied to the back surface of the primary backing component and the back stiches. An optional adhesive composition **110** is further applied to the inventive carpet. A secondary backing material **114** is disposed on an optional reinforcing material **112.** In some aspects, a layer of the reinforcing material **112** can be embedded between a precoated greige goods and secondary backing material. The layer of reinforcing material has been found to enhance the dimensional stability of the carpet composition. Suitable reinforcing materials include dimensionally and thermally stable fabrics such as non-woven or wet-laid fiberglass scrims, as well as woven and non-woven thermoplastic fabrics (e.g. polypropylene, nylon and polyester). In some aspects, the reinforcement layer is a fiberglass scrim, for example, Duraglass that is commercially available from Johns Manville (about 2.0 oz /square yard). Alternatively, in other aspects, a reinforcement layer is a fiberglass scrim sold by Owens Corning (about 2.0 oz/square yard).

In some aspects, the secondary backing material can comprise a thermoplastic polyolefin. In certain aspects, the secondary backing material comprises substantially linear ethylene polymers and homogeneously branched linear ethylene polymers (i.e., homogeneously branched ethylene polymers). Homogeneously branched ethylene polymers (including substantially linear ethylene polymers in particular) have low solidification temperatures, good adhesion to polypropylene, and low modulus relative to conventional ethylene polymers such as low density polyethylene (LDPE), heterogeneously branched linear low density polyethylene (LLDPE), high density polyethylene (HDPE), and heterogeneously branched ultra low density polyethylene (ULDPE).

In some aspects, when properly selected substantially linear ethylene polymers or homogeneously branched linear ethylene polymers are used as the secondary backing materials, the low flexural modulus of these polymers offers advantages in ease of carpet installation and general carpet handling. Substantially linear ethylene polymers, in particular, when employed as a secondary backing material show enhanced mechanical adhesion to polypropylene which improves the consolidation and delamination resistance of the various carpet layers and components, i.e., polypropylene fibers, fiber bundles, the primary backing component. In some aspects, good abrasion resistance is especially important in commercial carpet cleaning operations as good abrasion resistance generally improves carpet durability.

In certain aspects, the secondary backing material comprising a substantially linear ethylene polymer or homogeneously branched linear ethylene polymer can provide a substantial fluid and particle barrier which enhances the hygienic properties of carpet.

In some further aspects, use of the secondary backing material comprising a substantially linear ethylene polymer or homogeneously branched linear ethylene polymer can allow totally recyclable carpet products particularly where the carpet comprises polypropylene fibers.

The secondary backing material can comprise a homogeneously branched ethylene polymer. The homogeneously branched ethylene polymer can have a single melting peak between -30° C and 150° C, as determined using differential scanning calorimetry. In some aspects, the homogeneously branched ethylene polymer used in the secondary backing material of this invention, is a substantially linear ethylene polymer characterized as having (a) a melt flow ratio, I₁₀/I₂>5.63; (b) a molecular weight distribution, M_{w}/Mₙ, as determined by gel permeation chromatography and defined by the equation: (*M* _{w} /*M* ₙ)<(*I* ₁₀ /*I* ₂)-4.63; (c) a gas extrusion rheology such that the critical shear rate at onset of surface melt fracture for the substantially linear ethylene polymer is at least 50 percent greater than the critical shear rate at the onset of surface melt fracture for a linear ethylene polymer, wherein the linear ethylene polymer has a homogeneously branched short chain branching distribution and no long chain branching, and wherein the substantially linear ethylene polymer and the linear ethylene polymer are simultaneously ethylene homopolymers or interpolymers of ethylene and at least one C₃-C₂₀ a-olefin and have the same I₂ and M_{w}/Mₙ and wherein the respective critical shear rates of the substantially linear ethylene polymer and the linear ethylene polymer are measured at the same melt temperature using a gas extrusion rheometer; and (d) a single differential scanning calorimetry, DSC, melting peak between -30° and 150° C.

Determination of the critical shear rate in regards to melt fracture as well as other rheology properties such as "rheological processing index" (PI), is performed using a gas extrusion rheometer (GER). The gas extrusion rheometer is described by M. Shida, R. N. Shroff and L. V. Cancio in Polymer Engineering Science, Vol. 17, No. 11, p. 770 (1977), and in "Rheometers for Molten Plastics" by John Dealy, published by VanNostrand Reinhold Co. (1982) on pp. 97-99. GER experiments are performed at a temperature of 190° C., at nitrogen pressures between about 250 and about 5500 psig (about 1.7 and about 37.4 MPa) using a 0.0754 mm diameter, 20:1 L/D die with an entrance angle of about 180°. For the substantially linear ethylene polymers used herein, the PI is the apparent viscosity (in kpoise) of a material measured by GER at an apparent shear stress of 2.15×10⁶ dyne/- cm² (2.19×10⁴ kg/m²). In certain aspects, the secondary backing material can comprise the substantially linear ethylene polymer having a PI in the range of 0.01 kpoise to 50 kpoise, 15 kpoise or less. The substantially linear ethylene polymers used herein also have a PI less than or equal to 70 percent of the PI of a linear ethylene polymer (either a Ziegler polymerized polymer or a homogeneously branched linear polymer as described by Elston in U.S. Pat. No. 3,645,992) having an I₂ and M_{w}/Mₙ, each within ten percent of the substantially linear ethylene polymer.

In some aspects, the homogeneously branched ethylene polymers used in the present invention can be characterized by a single DSC melting peak. The single melting peak is determined using a differential scanning calorimeter standardized with indium and deionized water. The method involves 5-7 mg sample sizes, a "first heat" to about 140° C which is held for 4 minutes, a cool down at 10°/min to -30° C which is held for 3 minutes, and heat up at 10° C/min to 150° C for the "second heat". The single melting peak is taken from the "second heat" heat flow vs. temperature curve. Total heat of fusion of the polymer is calculated from the area under the curve.

In a further aspect, for polymers having a density of about 0.875 g/cc to about 0.910 g/cc, the single melting peak may show, depending on equipment sensitivity, a "shoulder" or a "hump" on the low melting side that constitutes less than about 12 percent, typically, less than about 9 percent, and more typically less than about 6 percent of the total heat of fusion of the polymer. Such an artifact is observable for other homogeneously branched polymers such as Exact^{™} resins and is discerned on the basis of the slope of the single melting peak varying monotonically through the melting region of the artifact. Such an artifact occurs within 34° C, typically within 27 °C, and more typically within 20 °C of the melting point of the single melting peak. The heat of fusion attributable to an artifact can be separately determined by specific integration of its associated area under the heat flow vs. temperature curve.

In certain aspects, the molecular weight distribution (M_{w}/Mₙ) for the substantially linear ethylene polymers and homogeneous linear ethylene polymers used in the present invention is generally from about 1.8 to about 2.8. Substantially linear ethylene polymers are known to have excellent processability, despite having a relatively narrow molecular weight distribution. Unlike homogeneously and heterogeneously branched linear ethylene polymers, the melt flow ratio (I₁₀/I₂) of substantially linear ethylene polymers can be varied essentially independently of their molecular weight distribution, M_{w}/Mₙ.

In some aspects, the secondary backing material comprising homogeneously branched ethylene polymers includes interpolymers of ethylene and at least one α-olefin prepared by a solution, gas phase, or slurry polymerization process, or combinations thereof. In some aspects the α-olefins are represented by the following formula:

CH₂=CHR

where R is a hydrocarbyl radical. Further, R may be a hydro-carbyl radical having from one to twenty carbon atoms and as such the formula includes C₃-C₂₀ α-olefins. In other aspects, α-olefins for use as comonomers include propylene, 1-butene, 1-isobutylene, 1-pentene, 1-hexene, 4-methyl-1-pentene, 1-heptene and 1-octene, as well as other comonomer types such as styrene, halo- or alkyl-substituted styrenes, tetrafluoro-ethylene, vinyl benzocyclobutene, 1,4-hexadiene, 1,7-octadiene, and cycloalkenes, e.g., cyclopentene, cyclo-hexene and cyclooctene. In certain aspects, the comonomer will be 1-butene, 1-pentene, 4-methyl-1-pentene, 1-hexene, 1-heptene, 1-octene, or mixtures thereof, as secondary backing materials comprised of higher α-olefins will have especially improved toughness. In yet other aspects, the comonomer will be 1-octene and the ethylene polymer will be prepared in a solution process.

In certain aspects, the density of the substantially linear ethylene polymer or homogeneously branched linear ethylene polymer, as measured in accordance with ASTM D-792, does not exceed about 0.92 g/cc, and is generally in the range from about 0.85 g/cc to about 0.92 g/cc, from about 0.86 g/cc to about 0.91 g/cc, and from about 0.86 g/cc to about 0.90 g/cc.

In yet further aspects, the molecular weight of the homogeneously branched linear ethylene polymer or substantially linear ethylene polymer can be characterized using a melt index measurement according to ASTM D-1238, Condition 190° C/2.16 kg (formerly known as "Condition (E)" and also known as I₂). Melt index is inversely proportional to the molecular weight of the polymer. Thus, the higher the molecular weight, the lower the melt index, although the relationship is not linear. The melt index for the homogeneously branched linear ethylene polymer or substantially linear ethylene polymer is generally from about 1 grams/10 minutes (g/10 min) to about 500 g/10 min, about 2 g/10 min to about 300 g/10 min, from about 5 g/10 min to about 100 g/10 min, from about 10 g/10 min to about 50 g/10 min, and about 25 to about 35 g/10 min.

In some other aspects, an additional measurement can be useful in characterizing the molecular weight of the homogeneous linear ethylene polymer or the substantially linear ethylene polymer and can be performed using a melt index measurement according to ASTM D-1238, Condition 190° C/10 kg (formerly known as "Condition (N)" and also known as I₁₀). The ratio of the I₁₀ and the I₂ melt index terms is the melt flow ratio and is designated as I₁₀/I₂. For the substantially linear ethylene polymer, the I_{10/}I₂ ratio indicates the degree of long chain branching, i.e., the higher the I₁₀/I₂ ratio, the more long chain branching in the polymer. The I₁₀/I₂ ratio of the substantially linear ethylene polymer is at least about 6.5, at least about 7, or at least about 8. The I₁₀/I₂ ratio of the homogeneously branched linear ethylene polymer is generally less than about 6.3.

In some aspects, the ethylene polymers can have a relative low modulus. That is, the ethylene polymer is characterized as having a 2% secant modulus less than about 24,000 psi (163.3 MPa), less than about 19,000 psi (129.3 MPa), and less than about 14,000 psi (95.2 MPa), as measured in accordance with ASTM D790.

In certain aspects, the ethylene polymers described herein are substantially amorphous or totally amorphous. That is, the ethylene polymer is characterized as having a percent crystallinity less than about 40 percent, less than about 30 percent, more less than about 20, and less than about 10 percent, as measured by differential scanning calorimetry using the equation:
percent crystallinity % = (H_{f}/292)×100, where H_{f} is the heat of fusion in Joules/gram.

In other aspects, the homogeneously branched ethylene polymer (HBEP) can be used alone or can be blended or mixed with one or more synthetic or natural polymeric material. In some aspects, the polymers for blending or mixing with homogeneously branched ethylene polymers used in the present invention include, but are not limited to, another homogeneously branched ethylene polymer, low density polyethylene, heterogeneously branched LLDPE, heterogeneously branched ULDPE, medium density polyethylene, high density polyethylene, grafted polyethylene (e.g. a maleic anhydride extrusion grafted heterogeneously branched linear low polyethylene or a maleic anhydride extrusion grafted homogeneously branched ultra low density polyethylene), ethylene acrylic acid copolymer, ethylene vinyl acetate copolymer, ethylene ethyl acrylate copolymer, polystyrene, polypropylene, polyester, polyurethane, polybutylene, polyamide, polycarbonate, rubbers, ethylene propylene polymers, ethylene styrene polymers, styrene block copolymers, and vulcanates.

In further aspects, the secondary backing material can comprise a blend of at least two polyethylenes, wherein the polyethylene can comprise a homogeneously branched ethylene polymer (HBEP) or a substantially linear ethylene polymer (SLEP), or mixtures thereof. In other aspects, the secondary backing material can comprise a blend of at least three or four, or more polyethylenes, wherein the polyethylenes comprise a homogeneously branched ethylene polymer (HBEP) or a substantially linear ethylene polymer (SLEP), or mixtures thereof. Still further, the secondary backing material can comprise a polyethylene comprising at least about 80% by weight of at least one (or two or more) HBEP or SLEP as measured by weight of the polyethylene, including exemplary values of about 85, 90, 95, 97, 98, or about 99% by weight of the polyethylene, where any value can comprise an upper or a lower endpoint, as appropriate.

In the aspects, where the blend of at least two (or three or more) polyethylenes is used, the amount of each polyethylene can be individually varied in the amounts of, for example, from about 1, 5, 10, 15, 20, 25, 30, 35, 40, 45, 50, 55, 60, 65, 70, 75, 80, 85, 90, 95, 97 or about 98% by weight of the total blend, where any value can be used for the individual components, and any value can be used as an upper or a lower endpoint, as appropriate.

The density of the polyethylene components in the blend can be about 0.860, 0.870, 0.880, 0.885, 0.890, 0.895, 0.900, 0.905, or about 0.910 g/cc. Further, the density can be in a range derived from the above values where any above value can comprise an upper or a lower endpoint, as appropriate.

The actual blending or mixing of various polymers may be conveniently accomplished by any technique known in the art including, but not limited to, melt extrusion compounding, dry blending, roll milling, melt mixing such as in a Banbury mixer and multiple reactor polymerization. In some aspects, the blends or mixtures include a homogeneously branched ethylene polymer and a heterogeneously branched ethylene α-olefin interpolymer, wherein the α-olefin is a C₃-C₈ α-olefin prepared using two reactors operated in parallel or in series with different catalyst systems employed in each reactor. Multiple reactor polymerizations are described in applications U.S. Ser. No. 08/544,497, filed Oct. 18, 1995 and U.S. Ser. No. 08/327,156, filed Oct. 21, 1994. In some aspects, multiple reactor polymerizations comprise non-adiabatic solution loop reactors as described in provisional applications U.S. Ser. No. 60/014,696 and U.S. Ser. No. 60/014,705, both filed Apr. 1, 1996.

In another aspect, the secondary backing material can comprise a modified homogeneously branched ethylene polymer. In particular, in certain aspects of the invention the at least one homogeneously branched ethylene polymer that can be present within the secondary backing material can be modified by the addition of at least one adhesive polymeric additive. Suitable adhesive polymeric additives include, for example and without limitation, polymer products comprised of (1) one or more ethylenically unsaturated carboxylic acids, anhydrides, alkyl esters and half esters, e.g., acrylic acid, methacrylic acid, maleic acid, maleic anhydride, itaconic acid, fumaric acid, crotonic acid and citraconic acid, citraconic anhydride, succinnic acid, succinnic anhydride, methyl hydrogen maleate, and ethyl hydrogen maleate; esters of ethylenically unsaturated carboxylic acids, e.g., ethyl acrylate, methyl methacrylate, ethyl methacrylate, methyl acrylate, isobutyl acrylate, and methyl fumarate; unsaturated esters of carboxylic acids, e.g., vinyl acetate, vinyl propionate, and vinyl benzoate; and ethylenically unsaturated amides and nitriles e.g., acrylamide, acrylonitrile, methacrylonitrile and fumaronitrile; and (2) one or more ethylenically unsaturated hydrocarbon monomers such as aliphatic α-olefin monomers, e.g., ethylene, propylene, butene-1 and isobutene; conjugated dienes, e.g., butadiene and isoprene; and monovinylidene aromatic carbocyclic monomers, e.g., styrene, α-methylstyrene, toluene, and t-butylstyrene.

A modified homogeneously branched ethylene polymer for use in the secondary backing materials can be conveniently prepared by known techniques such as, for example, by interpolymerization or by a polymerization procedure followed by a chemical or extrusion grafting procedure. Suitable grafting techniques are described in U.S. Pat. Nos. 4,762,890; 4,927,888; 4,230,830; 3,873,643; and 3,882,194.

In some aspects, the adhesive polymeric additives for use in the present invention can include maleic anhydride grafts wherein maleic anhydride is grafted onto an ethylene polymer at a concentration of about 0.1 to about 5.0 weight percent, about 0.5 to about 1.5 weight percent. The presence of ethylene polymer/maleic anhydride grafts as adhesive polymeric additives in the present invention can improve the performance and operating window of extrusion coated homogeneously branched ethylene polymers as the secondary backing material, especially when used in connection with polar polymers such as for example, but is not limited to, nylon and polyester faced carpets. The improvement pertained to substantially higher comparative abrasion resistance and tuft bind strength. In an exemplary aspect, a composition for forming a maleic anhydride graft is the Amplify^{®} GR 204 available from Dow Chemicals.

In further aspects, the ethylene polymers for use as the grafted host polymer include low density polyethylene (LDPE), high density polyethylene (HDPE), heterogeneously branched linear low density polyethylene (LLDPE), homogeneously branched linear ethylene polymers and substantially linear ethylene polymers. In some aspects, the host ethylene polymers have a polymer density greater than or equal to about 0.86 g/cc, 0.87 g/cc, 0.88 g/cc, 0.89 g/cc, 0.90 g/cc, 0.91 g/cc, 0.92 g/cc, 0.93 g/cc, or greater than or equal to about 0.94 g/cc. In yet other aspects, the substantially linear ethylene polymers and high density polyethylene are utilized as host ethylene polymers.

In some aspects, it is contemplated that the secondary backing material to be extruded or applied by any other technique known in the art. In some aspects, the secondary backing material of this invention may optionally include exemplary additives such as foaming agents, pH controllers, flame retardants, fillers, tackifiers, wetting agents, dispersing agents, anti-microbial agents, lubricants, dyes, antioxidants, and the like, which are well known to those skilled in the art, without loss of the characteristic properties.

In one aspect, the secondary backing material can further comprise one or more flame retardants sufficient to ensure the carpet structure satisfies the requirements of the radiant flux floor covering test according to the ASTM-E648 testing procedures. In particular, according to certain aspects, the carpet compositions of the present invention exhibit a Class 1 critical radiant flux of greater than 0.45 watts per cm² as measured according to ASTM-E648. According to other aspects of the invention, the carpet compositions described herein can exhibit a Class 2 critical radiant flux in the range of from 0.22 to 0.44 watts per cm² as measured according to ASTM-E648. In still further aspects, the carpet compositions of the present invention can exhibit an unclassifiable critical radiant flux of less than 0.22 watts per cm² as measured according to ASTM-E648.

Exemplary flame retardants that can be incorporated into the secondary backing materials of the present invention include, without limitation, organo-phosphorous flame retardants, red phosphorous magnesium hydroxide, magnesium dihydroxide, hexabromocyclododecane, bromine containing flame retardants, brominated aromatic flame retardants, melamine cyanurate, melamine polyphosphate, melamine borate, methylol and its derivatives, silicon dioxide, calcium carbonate, resourcinol bis-(diphenyl phosphate), brominated latex base, antimony trioxide, strontium borate, strontium phosphate, monomeric N-alkoxy hindered amine (NOR HAS), triazine and its derivatives, high aspect ratio talc, phosphated esters, organically modified nanoclays and nanotubes, non-organically modified nanoclays and nanotubes, ammonium polyphosphate, polyphosphoric acid, ammonium salt, triaryl phosphates, isopropylated triphenyl phosphate, phosphate esters, magnesium hydroxide, zinc borate, bentonite (alkaline activated nanoclay and nanotubes), organoclays, aluminum trihydrate (ATH), azodicarbonamide, diazenedicarboxamide, azodicarbonic acid diamide (ADC), triaryl phosphates, isopropylated triphenyl phosphate, triazine derivatives, alkaline activated organoclay and aluminum oxide. Any desired amount of flame retardant can be used in the secondary backing material of the instant invention and the selection of such amount will depend, in part, upon the particular flame retardant used and desired carpet applications. Such amounts can be readily determined through no more than routine experimentation.

Exemplary and non-limiting fillers that can be incorporated into the secondary backing materials of the present invention can include calcium carbonate, fly-ash, recycled calcium carbonate, aluminum trihydrate, talc, nano-clay, barium sulfate, barite, barite glass fiber, glass powder, glass cullet, metal powder, alumina, hydrated alumina, clay, magnesium carbonate, calcium sulfate, silica, glass, fumed silica, carbon black, graphite, cement dust, feldspar, nepheline, magnesium oxide, zinc oxide, aluminum silicate, calcium silicate, titanium dioxide, titanates, glass microspheres, chalk, calcium oxide, and any combination thereof. In one aspect, the secondary backing material comprises inorganic filler with high heat content. In some aspects, it is for the filler to exhibit relatively high heat content. Examples of such fillers include, but are not limited to, calcium carbonate, aluminum trihydrate, talc, and barite. The exemplified high heat content fillers allow the extrudate to remain at elevated temperatures longer with the beneficial result of providing enhanced encapsulation and penetration. In this aspect, the high heat content fillers should be ground or precipitated to a size that can be conveniently incorporated in an extrusion coating melt stream. Exemplary non-limiting particle sizes for the inorganic filler material can include particle sizes in the range of from about 1 to about 50 microns. Still further, it should also be understood that the filler component can be present in any desired amount. However, in an exemplary aspect, the filler is present in an amount in the range of from about 10 weight % to about 90 weight %, based upon the total weight of the secondary backing material, including exemplary amounts of about 15 weight %, 20 weight %, 25 weight %, 30 weight %, 35 weight %, 40 weight %, 45 weight %, 50 weight %, 55 weight %, 60 weight %, 65 weight %, 70 weight %, 75 weight %, 80 weight %, and about 85 weight %. Still further, the amount of filler present can be in any range derived from any two of the above stated weight percentages.

In still another aspect, the secondary backing material can further comprise one or more tackifying additives. The tackifier can for example be tall oil or rosin based or, alternatively, can be an aliphatic or aliphatic aromatic hydrocarbon blend resin. As the tackifier is an optional component, the amount of tackifier can be, when present, in the range of from greater than 0 weight percent up to and even exceeding about 50 weight % of the secondary backing material. For example, in one aspect, the amount of tackifier can be in the range of from about 5 weight % to about 45 weight %. In still another aspect, the amount of tackifier can be in the range of from about 10 weight % to about 20 weight %.

In other aspects, the carpet compositions can further comprise additional backings. In some aspects, the additional backing can comprise woven materials. In yet other aspects, the backings can comprise a tape-tape yarn, or a tape-spun yarn. In certain aspects, the additional backing materials are tape-tape yarn woven materials. In certain exemplary aspects, the material for additional backings can be a conventional material, for example and without limitation, the woven polypropylene fabric sold by Propex. Such backings can comprise a material that is a leno weave with polypropylene tape running in one direction and polypropylene spun yarn running in the other. In other aspects, the backing material that can be used with the present invention is a woven polypropylene fabric with monofilaments running in both directions. A suitable example of such a material is manufactured by Shaw Industries, Inc. under the designation Style S8880. In further aspects, the additional backing material is a material known as fiber lock weave or "FLW." FLW is a fabric which includes fibers needle punched into it. Sometimes FLW is used as a primary backing component on a carpet with a low pile weight. In some aspects, the additional backing can be a woven needle punched polypropylene fabric such as SoftBac^{®} manufactured by Shaw Industries, Inc. In this exemplary aspect, this material has been enhanced by having about 1.5 ounce/sq. yard of polypropylene fibers or polyethylene terephthalate fibers needle punched onto one side of it and has a total basis weight of about 3.5 ounce/sq. yard. This needle punched fabric can be laminated so as to have the polypropylene fibers embedded within the backing layer. In still further aspects other materials can be used for the additional backing, for example, and without limitation, if an integral pad is desired, a polyurethane foam or other cushion material can be laminated to the back side of the carpet. Such backings can be used for broadloom carpet.

In certain aspects, the carpet composition disclosed herein comprises a carpet tile, a broadloom carpet, an area rug, or a synthetic turf. In yet other aspects, the carpet composition disclosed herein is a carpet tile, a broadloom carpet, an area rug, or a synthetic turf.

### C. PERFORMANCE CHARACTERISTICS

It has been found that the carpets compositions comprising an inventive precoat composition demonstrate exceptional wet strength properties. In some aspects, the carpet composition of disclosed herein exhibits a wet delamination strength greater than a wet delamination strength of a comparative reference carpet composition, wherein the comparative reference carpet composition comprises a substantially identical reference primary backing having a face and a back side a substantially identical plurality of reference fibers attached to the reference primary backing material and extending from the face of the reference primary backing material and exposed at the back side of the reference primary backing material, a reference precoat composition comprising a substantially identical binder and a filler other than a kaolin clay slurry; and a substantially identical reference secondary backing material applied to a back surface of the reference precoat layer.

In yet other aspects, the carpet composition exhibits a wet delamination strength that is at least 10 %, at least 20 %, at least 30 %, at least 40 %, at least 50%, at least 60 %, at least 70 %, at least 80 %, at least 90 %, at least 100%, at least 120 %, at least 150 %, at least 170 %, at least 200 %, at least 220%, at least 250 %, at least 270 %, at least 300 %, at least 350 %, at least 400 %, or at least 500% greater than the wet delamination strength of the comparative reference carpet composition. In yet other aspects, the carpet composition disclosed herein exhibits a wet delamination strength in any range between any two of the foregoing endpoints.

In some aspects, the carpet composition disclosed herein exhibits a wet delamination strength from about 2 pounds to about at least 15 pounds, including exemplary values of about 3 pounds, about 4 pounds, about 5 pounds, about 6 pounds, about 7 pounds, about 8 pounds, about 9 pounds, about 10 pounds, about 11 pounds, about 12 pounds, about 13 pounds, and about 14 pounds. In yet other aspects, the carpet composition disclosed herein exhibits a wet delamination strength in any range between any two of the foregoing endpoints.

In some other aspects, the carpet composition disclosed herein substantially similar wet and dry delamination strength. In yet other aspects, the carpet composition can exhibit a wet delamination strength that is greater than its dry delamination strength.

In some aspects, the carpet composition disclosed herein exhibits strength measured by Tuft Bind test from about 5 pounds to about 25 pounds, including exemplary values of about 6 pounds, about 7 pounds, about 8 pounds, about 9 pounds, about 10 pounds, about 11 pounds, about 12 pounds, about 13 pounds, about 14 pounds, about 15 pounds, about 16 pounds, about 17 pounds, about 18 pounds, about 19 pounds, about 20 pounds, about 21 pounds, about 22 pounds, about 23 pounds, and about 24 pounds. In yet other aspects, the carpet composition can exhibit strength measured by Tuft Bind test in any range between any two of the foregoing endpoints.

In certain aspects, the carpet composition disclosed herein is evaluated by VELCRO^{®} test for a visual degree of fuzzing, wherein the visible fuzzing ratings are based on appearance scale of 1 to 10. In some aspects, the fuzzing ratings for the carpet composition disclosed herein are from 1 to 10, including exemplary values of 2, 3, 4, 5, 6, 7, 8, and 9. In yet other aspects, the carpet composition can exhibit fuzzing ratings in any range between any two of the foregoing endpoints.

### D. METHODS OF MAKING CARPETS

In still further aspects, disclosed herein are the methods of making carpet compositions comprising the inventive precoat compositions.

The face of a tufted carpet can generally be made in three ways. First, for loop pile carpet, the yarn loops formed in the tufting process are left intact. Second, for cut pile carpet, the yarn loops are cut, either during tufting or after, to produce a pile of single yarn ends instead of loops. Third, some carpet styles include both loop and cut pile. One variety of this hybrid is referred to as tip-sheared carpet where loops of differing lengths are tufted followed by shearing the carpet at a height so as to produce a mix of uncut, partially cut, and completely cut loops. Alternatively, the tufting machine can be configured so as to cut only some of the loops, thereby leaving a pattern of cut and uncut loops. Whether loop, cut, or a hybrid, the yarn on the back surface of the primary backing component comprises tight, unextended loops. The combination of tufted yarn and a primary backing component without the application of an adhesive backing material or secondary backing material is referred to in the carpet industry as raw tufted carpet or greige goods. Greige goods become finished tufted carpet with the application of secondary backing materials or any other additional backings if present to the back surface of the primary backing material. In the aspects of the current invention, the greige goods become finished tufted carpet with the application of the secondary backing material. Finished tufted carpet can be prepared as broad-loomed carpet in rolls typically 6 or 12 feet wide. In some other aspects, broadloom carpet can be prepared in rolls 13'6" and 15' feet wide.

In another aspect, any conventional tufting or needle-punching apparatus and/or stitch patterns can be used to make the carpet compositions of the present invention. Likewise, it does not matter whether tufted yarn loops are left uncut to produce a loop pile; cut to make cut pile; or cut, partially cut and uncut to make a face texture known as tip sheared. After the yarn is tufted or needle-punched into the primary backing component, the greige good can be conventionally rolled up with the back surface of the primary backing component facing outward and held until it is transferred to the backing line.

The inventive precoat composition can be applied as a precoat composition layer to the carpet composition in various ways. For example, the dispersion can be applied directly, such as with a roll over roller applicator, or a doctor blade. Alternatively, the precoat composition can be applied indirectly, such as with a pan applicator. It is contemplated that the amount of precoat applied and the concentration of the particles in the precoat can be varied depending on the desired processing and product parameters. In some aspects, the precoat composition layer is present in the carpet composition an amount of about 17 ounces/sq. yard or less, about 16 ounces/sq. yard or less, about 15 ounces/sq. yard or less, about 14 ounces/sq. yard or less, about 13 ounces/sq. yard or less, or about 12 ounces/sq. yard or less .

After application of the precoat composition layer, heat can be applied to the back side of the primary backing so as to dry, melt, and/or cure the composition. As a result, the loops of yarn can be at least partially fixed to the primary backing. Preferably, the heat is applied by passing the product through an oven.

After treatment with the optional precoat composition comprising a binder and a filler comprising kaolin clay slurry as described above, additional backing material can be applied thereto. The additional backings can be applied by various methods with the preferred method involving the use of an extruded sheet of a thermoplastic material. In some aspects, a molten thermoplastic material is extruded through a die so as to make a sheet which is as wide as the carpet composition. The molten, extruded sheet is applied to the back side of the primary carpet backing. Since the sheet is molten, the sheet will conform to the shape of the loops of yarn and further serve to encapsulate and fix the loops in the primary backing.

Exemplary extrusion coating configurations can include, without limitation, a monolayer T-type die, single-lip die coextrusion coating, dual-lip die coextrusion coating, a coat hanger die, and multiple stage extrusion coating. Preferably, the extrusion coating equipment is configured to apply a total coating weight of from about 4 to about 60 ounces/yd² (OSY), including exemplary amounts of 5, 10, 15, 20, 25, 30, 35, 40, 45, 50 and 55 ounces/yd² (OSY), and any range of coating weights derived from these values. To that end, it should be understood that the desired coating weight of the extrusion coated layers will depend, at least in part, upon the amount of any flame retardants or inorganic fillers in the extrudate.

The extrusion coating melt temperature principally depends on the particular composition of the backing composition being extruded. When using the secondary backing composition describe herein is extruded, the extrusion coating melt temperature can be greater than about 176.7°C (350°F) and, in some aspects, in the range of from 176.7°C to 343°C (350°F to 650°F). In another aspect, the melt temperature can be in the range of from 190°C to315.6°C (375°F to 600°F). Alternatively, the melt temperature can be in the range of from 204.4°C to 287.8°C (400°F to 550°F).

One skilled in the art will appreciate that, notwithstanding the particular examples described above, it is contemplated that the carpet composition may be produced by the processes known to those skilled in the art, including but not limited to direct coating and roll metering, and knife-coating and lick-roll application, as described in D. C. Blackly, Latex and Textiles, section 19.4.2, page 361.

The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in ° F or is at ambient temperature, and pressure is at or near atmospheric.

### EXAMPLE 1

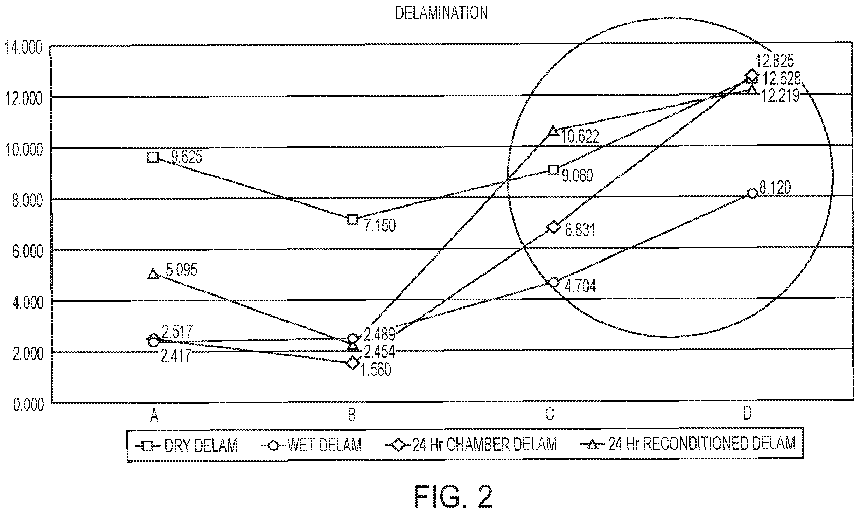

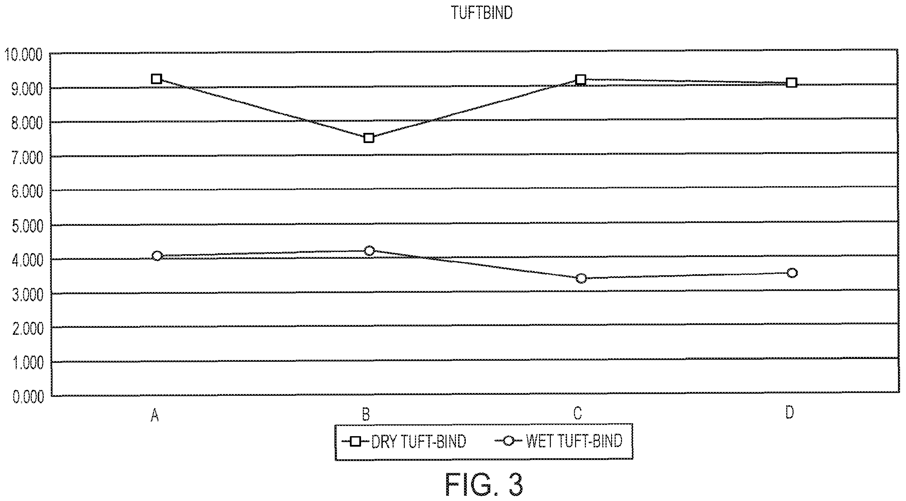

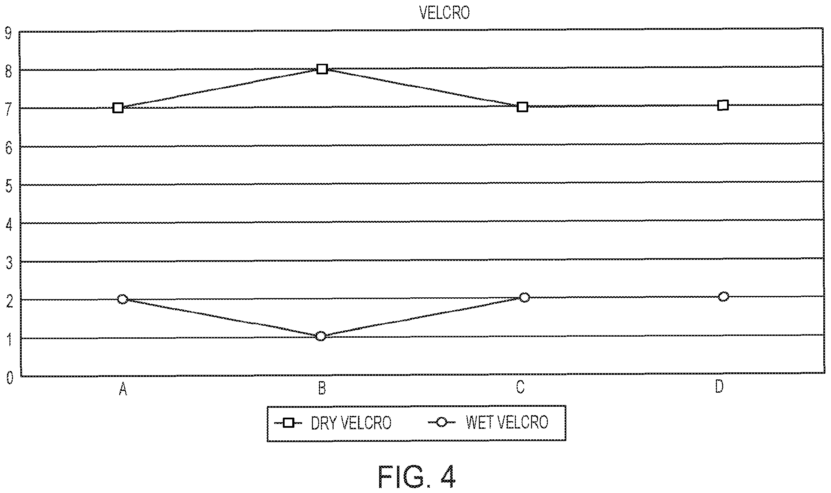

Samples A and B define control carpet compositions comprising a primary backing, a plurality of fibers attached to the primary backing material and extending from the surface of the primary backing material and exposed at the back side of the primary backing material; a layer of commercially available precoat composition comprising vinyl ethylene acetate emulsion and a filler other than kaolin clay slurry; and a secondary backing material. Sample A defines a control carpet composition wherein the commercially available precoat composition was deposited on the primary backing in an amount of 17 ounces per sq. yard. Sample B defines a control carpet composition wherein the commercially available precoat composition was deposited on the primary backing in an amount of 15 ounces per sq. yard. Samples C is a comparative carpet composition, wherein the precoat layer comprises a binder and a filler comprising a kaolin clay slurry as described in detail above, and wherein the precoat is deposited on the primary backing in an amount of 15 ounces per sq. yard. Sample D is an inventive carpet composition, wherein the precoat layer comprises a binder and a filler comprising a kaolin clay slurry as described in detail above, wherein the secondary backing material also comprises an increased amount of tackifier and wherein the precoat is deposited on the primary backing in an amount of 15 ounces per sq. yard. The samples A trough D were subjected to various tests to determine the wet strength of the carpet composition. The results are demonstrated in Table 1 and Figures 2-4.

It was found that the wet delamination strength of inventive carpet compositions C and D is at least 100 % greater than the wet delamination strength of the control carpet compositions A and B. Even further it was shown that the wet delamination strength of the inventive carpet composition D is at least 400 % higher than the wet delamination strength of the control carpet compositions A and B. It was also found that the carpet compositions C and D when applied at the same amount as the control carpet composition B exhibits higher dry delamination strength. These results indicate that the inventive precoat composition can allow obtaining resilient and dimensionally stable carpet compositions.

Furthermore, it was found that when the carpet compositions A-D were conditioned in the Environmental Chamber at 32°C (90°F) and 90 % of relative humidity for 24 hours, and then tested for wet delamination according to ASTM D-3936, the inventive carpet compositions C and D exhibit higher wet delamination strength than the control compositions A and B. It was further found that after 24 hours of reconditioning after the Environmental Chamber of the carpet composition at ambient conditions, the wet delamination strength of the inventive carpet compositions C and D continued to increase.

**Table 1. Wet strength test results.**

| | Test | Sample A | Sample B | Sample C | Sample D |
|---|---|---|---|---|---|
| dry | Delamination | 9.625 pounds/inch | 7.150 pounds/inch | 9.080 pounds/inch | 12.628 pounds/inch |
| | Tuft-Bind | 9.246 pounds/inch | 7.487 pounds/inch | 9.172 pounds/inch | 9.072 pounds/inch |
| | VELCRO^{®} | 7 | 8 | 7 | 7 |
| | Area Under the Curve | 8.48 pounds/inch | 6.08 pounds/inch | 8.11 pounds/inch | 10.50 pounds/inch |
| wet | Delamination | 2.417 | 2.489 | 4.704 | 8.120 |
| | Test | Sample A | Sample B | Sample C | Sample D |
| | | pounds/inch | pounds/inch | pounds/inch | pounds/inch |
| | Tuft-Bind | 4.119 pounds/inch | 4.514 pounds/inch | 3.370 pounds/inch | 3.507 pounds/inch |
| | VELCRO^{®} | 2 | 1 | 2 | 2 |
| | Area Under the Curve | 2.42 pounds/inch | 2.15 pounds/inch | 3.89 pounds/inch | 6.41 pounds/inch |
| | 24 h Chamber Delamination | 2.517 pounds/inch | 1.560 pounds/inch | 6.831 pounds/inch | 12.835 pounds/inch |
| | 24 h Reconditioning Delamination | 5.095 pounds/inch | 2.254 pounds/inch | 10.622 pounds/inch | 12.219 pounds/inch |

While the preferred forms of the invention have been disclosed, it will be apparent to those skilled in the art that various changes and modifications may be made that will achieve some of the advantages of the invention without departing from the scope of the invention. Therefore, the scope of the invention is to be determined solely by the claims to be appended.

## Claims

1. A carpet composition comprising:
a) a primary backing material having a face side and a back side;
b) a plurality of fibers attached to the primary backing material and extending from the face side of the primary backing material and exposed at the back side of the primary backing material; and
c) a layer of precoat composition applied to the back side of the primary backing material, wherein said precoat composition comprises:
a) a binder;
b) from 20 % to 90 % by weight of a filler comprising a kaolin clay slurry; and
c) from greater than 0 % to 10 % by weight of a tackifier,
wherein the kaolin clay slurry has a total solids content from 60 % to 80 %, and wherein the precoat composition has a total solids content in the range of from 50 % to 90 %.

2. The carpet composition of claim 1, wherein the binder is present in an amount from 20 % to 90 % by weight of the precoat composition.

3. The carpet composition of claim 1, wherein the filler is present in an amount from 25 % to 85 % by weight of the precoat composition.

4. The carpet composition of claim 1, wherein the binder comprises one or more of latex, vinyl acetate ethylene (VAE) copolymers, styrene butadiene (SBR) copolymers, carboxylated styrene butadiene, butadiene methyl methacrylate (BDMMMA), styrene acrylics, vinyl acrylics, ethylene vinyl acetate copolymers, a thermoplastic dispersion, or any combinations thereof.

5. The carpet composition of claim 1, wherein the filler further comprises one or more of calcium carbonate, aluminum trihydrate, barite, feldspar, cullet, fly ash, limestone, or any combination thereof, preferably calcium carbonate.

6. The carpet composition of claim 1, wherein the filler comprises additional fillers derived from any recycled compositions.

7. The carpet composition of claim 6, wherein the filler further comprises calcium carbonate, and wherein the calcium carbonate and kaolin clay slurry are present in a substantially equal amount when measured in dry parts based on 100 dry parts of the binder.

8. The carpet composition of claim 1, wherein the kaolin clay slurry comprises a plurality of particles having a particle size from 0.3 µm to 1 µm.

9. The carpet composition of claim 1, further comprising a surfactant, a rheology agent, or a combination thereof.

10. The carpet composition of claim 1, comprising a blend of:
a. from 25% to 60% by weight of binder;
b. from 30 % to 70% by weight of filler comprising kaolin clay slurry;
c. from greater than 0% to 4% surfactant;
d. from greater than 0 to 2 % rheology agent; and
e. from greater than 0 to 10% tackifier.

11. The carpet composition of claim 1, wherein the tackifier is tall oil or rosin based or is an aliphatic or aliphatic aromatic hydrocarbon blend resin.

12. The carpet composition of any of claims 1 to 11, further comprising a secondary backing material applied to a back of the precoat layer.

13. The carpet composition of claim 12, wherein the secondary backing material comprises a thermoplastic polyolefin, preferably a homogeneously branched ethylene polymer, such as an interpolymer of ethylene with at least one C3-C20 α-olefin and/or a homogenously branched linear ethylene polymer.

14. The carpet composition of claim 12, wherein the precoat composition layer is present in an amount of 0.58 kg/m² (17 ounces/sq. yard) or less.

15. The carpet composition of claim 12, wherein the carpet comprises a carpet tile, a broadloom carpet, an area rug, or a turf.

## Patentansprüche

1. Teppichzusammensetzung, umfassend:
a) ein primäres Trägermaterial, das eine Vorderseite und eine Rückseite aufweist;
b) eine Vielzahl von Fasern, die an dem primären Trägermaterial befestigt sind und sich aus der Vorderseite des primären Trägermaterials erstrecken und an der Rückseite des primären Trägermaterials freigelegt sind; und
c) eine Schicht einer Vorbeschichtungszusammensetzung, die auf die Rückseite des primären Trägermaterials aufgetragen wird, wobei die Vorbeschichtungszusammensetzung umfasst:
a) ein Bindemittel;
b) 20 Gew.-% bis 90 Gew.-% eines Füllstoffes, der einen Kaolin-Ton-Schlamm umfasst; und
c) mehr als 0 Gew.-% bis 10 Gew.-% eines Klebrigmachers,
wobei der Kaolin-Ton-Schlamm einen Gesamtfeststoffgehalt von 60 % bis 80 % aufweist, und wobei die Vorbeschichtungszusammensetzung einen Gesamtfeststoffgehalt im Bereich von 50 % bis 90 % aufweist.

2. Teppichzusammensetzung nach Anspruch 1, wobei das Bindemittel in einer Menge von 20 Gew.-% bis 90 Gew.-% der Vorbeschichtungszusammensetzung vorhanden ist.

3. Teppichzusammensetzung nach Anspruch 1, wobei der Füllstoff in einer Menge von 25 Gew.-% bis 85 Gew.-% der Vorbeschichtungszusammensetzung vorhanden ist.

4. Teppichzusammensetzung nach Anspruch 1, wobei das Bindemittel eines oder mehrere umfasst aus Latex, Vinylacetat-Ethylen- (VAE)-Copolymeren, Styrol-Butadien- (SBR)-Copolymeren, carboxyliertem Styrol-Butadien, Butadienmethylmethacrylat (BDMMMA), Styrol-Acryl, Vinyl-Acryl, Ethylen-Vinylacetat-Copolymeren, einer thermoplastischen Dispersion oder beliebigen Kombinationen davon.

5. Teppichzusammensetzung nach Anspruch 1, wobei der Füllstoff weiter eines oder mehrere umfasst aus Calciumcarbonat, Aluminiumtrihydrat, Baryt, Feldspat, Bruchglas, Flugasche, Kalkstein oder einer beliebigen Kombination davon, vorzugsweise Calciumcarbonat.

6. Teppichzusammensetzung nach Anspruch 1, wobei der Füllstoff zusätzliche Füllstoffe umfasst, die aus beliebigen recycelten Zusammensetzungen abgeleitet sind.

7. Teppichzusammensetzung nach Anspruch 6, wobei der Füllstoff weiter Calciumcarbonat umfasst, und wobei das Calciumcarbonat und der Kaolin-Ton-Schlamm, wenn in Trockenteilen basierend auf 100 Trockenteilen des Bindemittels gemessen, in im Wesentlichen einer gleichen Menge vorhanden sind.

8. Teppichzusammensetzung nach Anspruch 1, wobei der Kaolin-Ton-Schlamm eine Vielzahl von Partikeln umfasst, die eine Partikelgröße von 0,3 µm bis 1 µm aufweisen.

9. Teppichzusammensetzung nach Anspruch 1, die weiter ein Tensid, ein Rheologiemittel oder eine Kombination davon umfasst.

10. Teppichzusammensetzung nach Anspruch 1, umfassend eine Mischung aus:
a. 25 bis 60 Gew.-% an Bindemittel;
b. 30 Gew.-% bis 70 Gew.-% an Füllstoff, umfassend Kaolin-Ton-Schlamm;
c. mehr als 0 % bis 4 % Tensid;
d. mehr als 0 bis 2 % Rheologiemittel; und
e. mehr als 0 bis 10 % Klebrigmacher.

11. Teppichzusammensetzung nach Anspruch 1, wobei der Klebrigmacher auf Tallöl oder Kolophonium basiert oder ein aliphatisches oder aliphatisches aromatisches Kohlenwasserstoffmischharz ist.

12. Teppichzusammensetzung nach einem der Ansprüche 1 bis 11, die weiter ein sekundäres Trägermaterial umfasst, das auf eine Rückseite der Vorbeschichtungsschicht aufgetragen ist.

13. Teppichzusammensetzung nach Anspruch 12, wobei das sekundäre Trägermaterial ein thermoplastisches Polyolefin, vorzugsweise ein homogen verzweigtes Ethylenpolymer, wie ein Ethylen-Interpolymer mit mindestens einem C3-C20-a-Olefin und/oder ein homogen verzweigtes lineares Ethylenpolymer umfasst.

14. Teppichzusammensetzung nach Anspruch 12, wobei die Vorbeschichtungszusammensetzungsschicht in einer Menge von 0,58 kg/m² (17 Unzen/Quadratyard) oder weniger vorhanden ist.

15. Teppichzusammensetzung nach Anspruch 12, wobei der Teppich eine Teppichfliese, eine Teppichbahn, einen Vorleger oder einen Rollrasen umfasst.

## Revendications

1. Composition de moquette comprenant :
a) un matériau de support primaire présentant un côté face et un côté arrière ;
b) une pluralité de fibres fixées au matériau de support primaire et s'étendant depuis le côté face du matériau de support primaire et exposées sur le côté arrière du matériau de support primaire ; et
c) une couche de composition de précouche appliquée sur le côté arrière du matériau de support primaire, dans laquelle ladite composition de précouche comprend :
a) un liant ;
b) de 20 % à 90 % en poids d'une charge comprenant une suspension d'argile kaolinique ; et
c) de plus de 0 % à 10 % en poids d'un agent poisseux,
dans laquelle la suspension d'argile kaolinique présente une teneur totale en matières solides de 60 % à 80 % et dans laquelle la composition de précouche présente une teneur totale en matières solides dans la plage de 50 % à 90 °/.

2. Composition de moquette selon la revendication 1, dans laquelle le liant est présent en une quantité de 20 % à 90 % en poids de la composition de précouche.

3. Composition de moquette selon la revendication 1, dans laquelle la charge est présente en une quantité de 25 % à 85 % en poids de la composition de précouche.

4. Composition de moquette selon la revendication 1, dans laquelle le liant comprend un ou plusieurs parmi le latex, des copolymères d'acétate de vinyle-éthylène (VAE), des copolymères de styrène-butadiène (SBR), du styrène-butadiène carboxylé, du méthacrylate de méthyle-butadiène (BDMMMA), du styrène-acryliques, du vinyle-acryliques, des copolymères d'éthylène-acétate de vinyle, une dispersion thermoplastique ou toute combinaison de ceux-ci.

5. Composition de moquette selon la revendication 1, dans laquelle la charge comprend en outre un ou plusieurs parmi le carbonate de calcium, le trihydrate d'aluminium, la barytine, le feldspath, le calcin, les cendres volantes, le calcaire ou toute combinaison de ceux-ci, de préférence le carbonate de calcium.

6. Composition de moquette selon la revendication 1, dans laquelle la charge comprend des charges supplémentaires dérivées de n'importe quelle composition recyclée.

7. Composition de moquette selon la revendication 6, dans laquelle la charge comprend en outre du carbonate de calcium et dans laquelle le carbonate de calcium et la suspension d'argile kaolinique sont présents en une quantité sensiblement égale lorsqu'elle est mesurée en parties sèches sur la base de 100 parties sèches du liant.

8. Composition de moquette selon la revendication 1, dans laquelle la suspension d'argile kaolinique comprend une pluralité de particules présentant une taille de particule de 0,3 µm à 1 µm.

9. Composition de moquette selon la revendication 1, comprenant en outre un tensioactif, un agent rhéologique ou une combinaison de ceux-ci.

10. Composition de moquette selon la revendication 1, comprenant un mélange présentant :
a. de 25 % à 60 % en poids de liant ;
b. de 30 % à 70 % en poids de charge comprenant une suspension d'argile kaolinique ;
c. de plus de 0 % à 4 % de tensioactif ;
d. de plus de 0 à 2 % d'agent rhéologique ; et
e. de plus de 0 à 10 % d'agent poisseux.

11. Composition de moquette selon la revendication 1, dans laquelle l'agent poisseux est à base de tallôl ou de colophane ou est une résine de mélange d'hydrocarbures aliphatiques ou aromatiques aliphatiques.

12. Composition de moquette selon l'une quelconque des revendications 1 à 11, comprenant en outre un matériau de support secondaire appliqué à l'arrière de la précouche.

13. Composition de moquette selon la revendication 12, dans laquelle le matériau de support secondaire comprend une polyoléfine thermoplastique, de préférence un polymère d'éthylène ramifié de manière homogène, tel qu'un interpolymère d'éthylène avec au moins une α-oléfine en C3-C20 et/ou un polymère d'éthylène linéaire ramifié de manière homogène.

14. Composition de moquette selon la revendication 12, dans laquelle la couche de composition de précouche est présente en une quantité inférieure ou égale à 0,58 kg/m² (17 onces/yard carré).

15. Composition de moquette selon la revendication 12, dans laquelle la moquette comprend une dalle de moquette, une moquette en rouleau, un petit tapis ou du gazon.
